(19) Europäisches Patentamt
European Patent Office
Office européen des brevets

(11) EP 2 088 455 A1

(12) **EUROPEAN PATENT APPLICATION**
published in accordance with Art. 153(4) EPC

(43) Date of publication:
**12.08.2009 Bulletin 2009/33**

(21) Application number: **07832853.1**

(22) Date of filing: **30.11.2007**

(51) Int Cl.:
***G02B 5/30*** *(2006.01)* ***G02F 1/1335*** *(2006.01)*

(86) International application number:
**PCT/JP2007/073171**

(87) International publication number:
**WO 2008/066157 (05.06.2008 Gazette 2008/23)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.11.2006 JP 2006323350**

(71) Applicant: **Nippon Steel Chemical Co., Ltd.**
**Chiyoda-ku**
**Tokyo 101-0021 (JP)**

(72) Inventor: **HANE, Tomoko**
**Moriyama-shi**
**Shiga 524-0064 (JP)**

(74) Representative: **Kuhnen & Wacker**
**Intellectual Property Law Firm**
**Prinz-Ludwig-Strasse 40A**
**85354 Freising (DE)**

# (54) POLARIZING PLATE PROTECTIVE FILM, POLARIZING PLATE, AND RESISTIVE TOUCH PANEL

(57) The present invention provides a polarizing plate protective film comprising a silane coupling agent layer on one surface of a siloxane-crosslinking acrylic silicone resin film; a polarizing plate comprising the protective film in such a manner that the protective film is laminated on one surface or both surfaces of the polarizer through the silane-coupling agent layer; and a resistive touch panel comprising the polarizing plate.

EP 2 088 455 A1

## Description

### TECHNICAL FIELD

The present invention relates to a polarizing plate protective film, a polarizing plate comprising the polarizing plate protective film, and a resistive touch panel comprising the polarizing plate.

### BACKGROUND ART

A polarizing plate is a material used for forming image display apparatuses, such as liquid crystal displays (LCDs), electroluminescence displays (ELDs) and plasma displays. Such a polarizing plate comprises a protective film that is bonded to at least one surface of a polarizer (polarizing film).

Hitherto, a polarizing plate comprising a triacetylcellulose (hereunder sometimes referred to as "TAC") film as a film protecting the polarizer and having a layered structure of TAC film/polarizer/TAC film has generally been used (see, for example, Patent Document 1).

However, such a polarizing plate usually requires, so as to bond the TAC film to the polarizer, complicated steps comprising subjecting the TAC film surface to saponification treatment; subsequently drying the resulting film; and finally bonding the obtained film to a polarizer using an aqueous polyvinyl alcohol solution as an adhesive. Moreover, the polarizing plate comprising a TAC film as a protective film originally has a surface pencil hardness of about H. Even when the surface thereof is subjected to a hardcoat treatment, the surface pencil hardness would be as low as about 2H. In addition, the TAC film has high water absorptivity and moisture permeability; therefore, in a high temperature and high humidity environment, defects such as a decreased polarization degree, a hue change, optical leakage in a crossed-nicol state, a large dimensional change of the polarizing plate, etc. would occur in a short period of time.

Other than the TAC film, an attempt to utilize a polycarbonate, an acrylic polymer, etc., as a film protecting the polarizer has been made. However, bonding such films to a polarizer is, at present, too difficult to be feasible.

A resistive-low reflection touch panel comprising a polarizing plate on the surface thereof has been recently employed in input devices of car navigation systems and so forth. However, the dimensional change of the polarizing plate due to the harsh, high temperature and high humidity in-vehicle environment may cause defects in the touch panel.

Patent Document 1: Japanese Unexamined Patent Publication No. 2006-227604

### DISCLOSURE OF THE INVENTION

### PROBLEMS TO BE SOLVED BY THE INVENTION

An object of the present invention is to provide a polarizing plate protective film that, because of its high surface hardness, requires no hardcoat treatment; and that suffers, even in a high temperature and high humidity environment, no decrease of polarization degree, nor a dimensional change, etc. It is also an object of the present invention to provide a polarizing plate comprising the polarizing plate protective film, and a resistive touch panel comprising the polarizing plate.

### MEANS FOR SOLVING THE PROBLEMS

The present inventor conducted extensive research in order to achieve the aforementioned object. As a result, the inventor found that a polarizing plate protective film obtained by forming a silane coupling agent layer on one surface of a siloxane-crosslinking acrylic silicone resin film can readily be bonded to a polarizer, without involving complicated steps, and that the polarizing plate obtained using this protective film can minimize, even in a high temperature and high humidity environment, the causes of the decrease of polarization degree, the dimensional change of the polarizing plate, etc.

The present inventor further found that when such a polarizing plate protective film is used on the surface of a polarizing plate, i.e., on the top surface of an LCD or a touch panel, high surface hardness may be provided thereon.

Based upon these findings, the present inventor conducted further research to thereby accomplish the present invention.

The present invention provides a polarizing plate protective film, a polarizing plate comprising the polarizing plate protective film and a resistive touch panel comprising the polarizing plate.

1. A polarizing plate protective film comprising a silane coupling agent layer on one surface of a siloxane-crosslinking acrylic silicone resin film.

2. The polarizing plate protective film according to Item 1, wherein the silane coupling agent is an isocyanate-based silane coupling agent.

3. A polarizing plate comprising the protective film of Item 1 and a polarizer, in such a manner that the protective

film is laminated on one surface or both surfaces of the polarizer through the silane coupling agent layer.

4. The polarizing plate according to Item 3, wherein the polarizer is a polarizing film comprising a polyvinyl alcohol-based polymer, to which iodine or dichromatic dye is absorbed.

5. The polarizing plate according to Item 3, wherein the protective film and the polarizer are bonded to each other by means of an aqueous adhesive comprising an aqueous polyvinyl alcohol solution.

6. A resistive touch panel comprising the polarizing plate of Item 3.

Polarizing Plate Protective Film

A film protecting the polarizing plate of the present invention is obtained by forming a silane-coupling agent layer on one surface of a siloxane-crosslinking acrylic silicone resin film.

Siloxane-Crosslinking Acrylic Silicone Resin

In the protective film, a resin forming the siloxane-crosslinking acrylic silicone resin film is an organic-inorganic hybrid polymer comprising an acrylic resin portion and a silicone resin portion.

Examples of siloxane-crosslinking acrylic silicone resin films include films obtained using the silicone resin composition disclosed in WO 2004/085501 A1, and the silicone resin composition disclosed in Japanese Unexamined Patent Publication No. 2004-123936.

In particular, a film obtained using the following silicone resin composition as disclosed in WO 2004/085501 A1 is preferable.

Specifically, the preferable film is obtained using a silicone resin composition that comprises, at a weight ratio of 1:99 to 99:1, a silicone resin represented by Formula (1):

$$[RSi0_{3/2}]_n \qquad (1)$$

wherein R is an organic functional group having a (meth)acryloyl group, and n is 8, 10 or 12, the silicone resin being mainly composed of a polyorganosilsesquioxane having a cage structure in its structural unit; and an unsaturated compound comprising, in its molecule, at least one unsaturated group represented by: $-R^1-CR^2 = CH_2$ or $-CR^2 = CH_2$, wherein $R^1$ is an alkylene group, an alkylidene group or a -OCO-group, and $R^2$ is hydrogen or an alkyl group, the unsaturated compound being radically copolymerizable with the silicone resin.

In the above silicone resin composition, an alicyclic unsaturated compound represented by the following Formula (2) is preferably contained in an amount of 10 to 100 wt.%, relative to the total amount of the unsaturated compound that is radically copolymerizable with a silicone resin. In Formula (2), Z is a group represented by the following Formula (2a) or (2b).

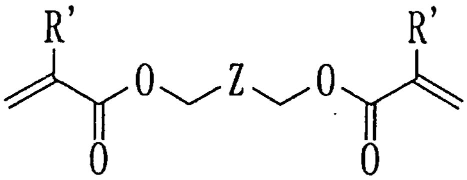

(2)

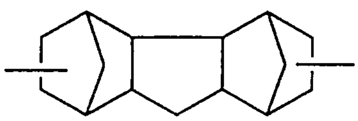

(2a)

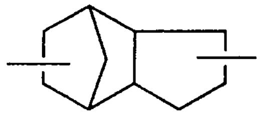

(2b)

In Formula (2), R' is a hydrogen atom, an alkyl group (in particular, a lower alkyl group such as a methyl group), a phenyl group, a (meth)acryloyl group, or the like.

The siloxane-crosslinking acrylic silicone resin film may be produced by, for example, adding a radical polymerization initiator, such as a thermal polymerization initiator, a photoinitiator or the like, to the silicone resin composition disclosed in, in particular, WO 2004/085501 A1; subsequently casting the resulting mixture onto a polyethylene terephthalate film (hereinafter referred to as a PET film), a cyclic polyolefin film, a polypropylene film, a polyethylene film or the like; and curing the resulting product by heating or by light irradiation. Of the above films, a PET film is preferably used.

When heating is employed in the preparation of the film, the curing temperature therein may be selected from a wide range, from a room temperature to about 200°C, depending on the types etc. of the thermal polymerization initiator to be used. When light irradiation is employed in the preparation of the film, the film may be obtained by irradiation with ultraviolet radiation having a wavelength of 10 to 400 nm, or a visible radiation having a wavelength of 400 to 700 nm. The usable wavelength is not critical, but a near-ultraviolet radiation having a wavelength of 200 to 400 nm is particularly preferable. Examples of lamps used as ultraviolet radiation sources include low-pressure mercury lamps (output: 0.4 to 4 W/cm), high-pressure mercury lamps (40 to 160 W/cm), extra-high pressure mercury lamps (173 to 435 W/cm), metal halide lamps (80 to 160 W/cm), pulse xenon lamps (80 to 120 W/cm), electrodeless discharge lamps (80 to 120 W/cm), and the like. Each of the ultraviolet lamps has spectral distribution features, and can therefore be selected depending on the types of the photoinitiator to be used.

The siloxane-crosslinking acrylic silicone resin film may be continuously and effectively produced by, for example, casting, using a comma coater, a starting material of the above silicone resin composition onto a continuously running PET film to a uniform thickness; laminating a continuously running transparent PET film thereon; crosslinking and curing the starting material resin by performing UV irradiation through the transparent PET film to form a siloxane-crosslinking acrylic silicone resin film; and subsequently separating, while reeling up the obtained target film, the two top and bottom PET films to be reeled up.

The thickness of the siloxane-crosslinking acrylic silicone resin film is not limited, as long as the siloxane-crosslinking acrylic silicone resin film functions as a polarizing plate protective film. The thickness thereof is usually preferably between about 1 and about 1,000 μm, and more preferably between about 30 and about 300 μm.

Silane Coupling Agent

The protective film of the present invention comprises a silane coupling agent layer on one surface of a siloxane-crosslinking acrylic silicone resin film. The silane coupling agent layer formed on the surface of the protective film undergoes a curing reaction due to the humidity. Such a reaction does not cause chemical damage to the iodine complex or dichromatic dye contained in the polarizer, but exerts advantageous effects improving the adhesive strength of the protective film with an aqueous adhesive, such as an aqueous polyvinyl alcohol solution or the like.

The silane coupling agent layer may readily be formed by applying a coating liquid obtained using the coupling agent that is, if necessary, diluted with an organic solvent and/or water; and drying the resulting product. Examples of the usable organic solvents include alcohols such as isopropyl alcohol, ethyl alcohol and the like; and hydrocarbons such as cyclohexane and the like. The silane coupling agent is usually contained in the coating liquid in a concentration of preferably about 0.1 to about 100 vol.%, and more preferably about 1 to about 5 vol.%.

In the application of the silane coupling agent, in order to improve the wettability and adhesiveness of the film surface of the siloxane-crosslinking acrylic silicone resin, a surface modification treatment such as a flame treatment, a UV irradiation treatment, a corona discharge treatment, a plasma treatment, an ITRO treatment, a primer treatment, a chemical treatment or the like may be performed prior to the application. The corona discharge treatment and UV irradiation treatment may be performed in air, in nitrogen gas, in rare gas or the like.

Examples of the usable silane coupling agents include isocyanate-based silane coupling agents, amine-based silane coupling agents, and the like.

Examples of amine-based silane coupling agents include
3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-triethoxysilyl-N-(1,3-dimethylbutylidene)propylamine, N-phenyl-3-aminopropyltrimethoxysilane, and the like.

The usable isocyanate-based silane coupling agents are preferably those represented by the following Formula (3):

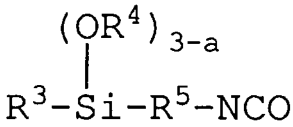

(3)

wherein $R^3$ and $R^4$ are the same or different substituted or unsubstituted monovalent hydrocarbon groups, preferably having 1 to 12 carbon atoms, and more preferably 1 to 6 carbon atoms. Examples of such monovalent hydrocarbon groups include alkyl groups such as methyl, ethyl, propyl, butyl, hexyl and the like; cycloalkyl groups such as cyclohexyl and the like; alkenyl groups such as vinyl, allyl and the like; aryl groups such as phenyl, tolyl and the like; and groups in which a part or all of the hydrogen atoms of the above groups are substituted with a halogen atom, cyano group or the like, such as chloromethyl group, trifluoropropyl group and cyanoethyl group. $R^3$ and $R^4$ may also be, for example, methoxymethyl, ethoxymethyl, methoxyethyl, and like $C_{1-10}$ alkoxy-substituted $C_{1-10}$ alkyl groups, phenylethyl and like $C_{7-20}$ aralkyl groups, or the like. Examples of hydrolyzable groups that are represented by $OR^4$ include $C_{1-10}$ alkoxy groups, $C_{2-10}$ alkenyloxy groups, $C_{6-16}$ aryloxy groups, $C_{1-10}$ alkoxy substituted $C_{1-10}$ alkoxy groups, $C_{7-17}$ aralkyloxy groups, and the like. $R^5$ represents an alkylene group such as methylene, ethylene, propylene; an arylene group such as phenylene; and like $C_{1-10}$ divalent hydrocarbon groups or $C_{1-10}$ sulfur-substituted divalent hydrocarbon groups. Further, a represents 0, 1, or 2.

Specific examples of isocyanate-based silane coupling agents are shown below. The isocyanate-based silane coupling agent may be a condensate in which each of the following examples is singly hydrolyzed, or a hydrolyzed condensate of a silane mixture in which at least one of the following examples is mixed with $(R^4O)_2SiR^3{}_2$, $(R^4O)_3SiR^3$ or the like.

$(CH_3O)_3$-Si-$(CH_2)_3$-NCO $(C_2H_5O)_3$-Si-$(CH_2)_3$-NCO

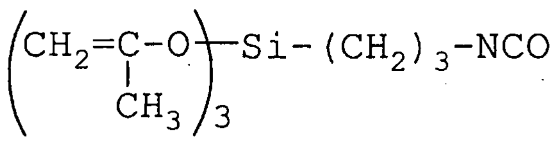

$(CH_3OC_2H_4O)_3$-Si-$(CH_2)_3$-NCO

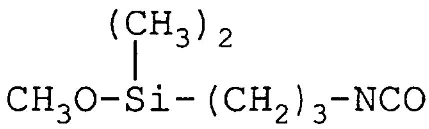

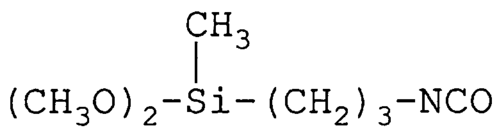

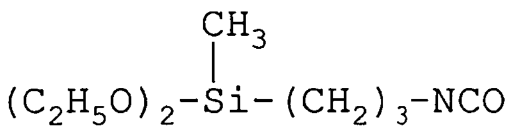

$(CH_3O)_3$-Si-$(CH_2)_2S(CH_2)_3$-NCO

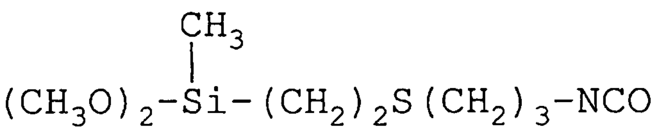

Such silane coupling agents may be used singly or in a combination of two or more. Of these coupling agents, isocyanate-based silane coupling agents are particularly preferably used, since the decrease of polarization degree and the hue change may be minimized even in a high temperature and high humidity environment.

The coating method of the silane coupling agent is not limited, as long as the silane coupling agent can be coated on a siloxane-crosslinking acrylic silicone resin film. Examples of such methods include those using a gravure

roll, a wire bar, a rag, a die coater, a comma coater, a roll coater, and a Meyer bar.

The thickness of the silane coupling agent layer is not critical as long as the silane coupling agent layer can be bonded to the polarizer without impairing the functions of the polarizing plate. The thickness thereof after drying is usually preferably about 2 nm to about 1 μm. As the drying conditions after the application, the obtained product is preferably dried at about room temperature to about 100°C for about 1 to about 10 minutes.

The protective film of the present invention may be obtained by forming a silane coupling agent layer on one surface of a siloxane-crosslinking acrylic silicone resin film.

Fig. 1 schematically illustrates a cross-section of the polarizing plate protective film of the present invention. In Fig. 1, 1 indicates a siloxane-crosslinking acrylic silicone resin film layer, and 2 indicates a silane coupling agent layer

Polarizing Plate

The polarizing plate of the present invention comprises a polarizer and the protective film obtained by forming a silane coupling agent layer on one surface of the siloxane-crosslinking acrylic silicone resin film, in such a manner that the protective film is laminated on one surface or both surfaces of the polarizer via the silane coupling agent layer.

The polarizers (polarizing film) usable in the polarizing plate of the present invention are preferably those obtained by, for example, uniaxially stretching and orienting a film comprising a polyvinyl alcohol-based polymer such as a polyvinyl alcohol, a partially formalized polyvinyl alcohol or the like; allowing iodine to be adsorbed into/onto the resulting film; treating the obtained product with an aqueous boric acid solution; and drying the treated product under tension; or those obtained by immersing a film comprising a polyvinyl alcohol-based polymer in an aqueous iodine solution so as to allow the iodine to be adsorbed into/onto the film; uniaxially stretching and orienting the resulting film in an aqueous boric acid solution; and drying the resulting product under tension. Polarizing films produced in the same manner as above using, in place of iodine, a dichromatic dye such as an azo dye, an anthraquinone dye, a tetrazine dye, or the like, may also be used.

The thickness of the thus-obtained polarizer (polarizing film) is not critical, as long as the functions of the polarizer are not impaired. The thickness is usually preferably about 5 to about 100 μm. Further, the polarizer preferably has a polarization degree of 95.0% or more, more preferably 99.0% or more, and still more preferably 99.7% or more.

The polarizing plate of the present invention may usually readily be prepared by bonding protective films to both surfaces of the polarizer so as to have the layered structure of a protective film/polarizer/protective film.

As an adhesive, an aqueous adhesive comprising an aqueous polyvinyl alcohol solution is preferably used. The polyvinyl alcohol concentration is usually preferably about 0.1 to 5 wt.%.

The polyvinyl alcohols constituting the above adhesives preferably comprise, as a main component, a resin that is obtained by subjecting a vinyl acetate resin to saponification, and preferably have a polymerization degree of about 1,000 to about 3,000 and a saponification degree of about 94% or more, and more preferably have a polymerization degree of about 1,500 to about 3,000 and a saponification degree of about 98% or more. According to the purpose, the polyvinyl alcohol may be a copolymer in which a vinyl acetate is copolymerized with a small amount of other monomers such as acrylic acid, crotonic acid, itaconic acid, etc.; or the polyvinyl alcohol may be those modified by, for example, alkyl groups, epoxy groups, etc.

The amount of adhesive solution applied is preferably about 0.01 to about 10 μm, more preferably about 0.02 to about 5 μm, and still more preferably about 0.05 to about 3 μm, in thickness after drying. When an overly small amount of the adhesive is applied, the adhesive strength is not likely to be obtained as expected. However, applying an overly large amount thereof is uneconomical.

The polarizing plate of the present invention may be obtained by bonding the polarizer, when the adhesive applied thereon is in a wet or semi-dry state, to the protective film(s), and drying the obtained product at room temperature to 60°C for 5 to 24 hours.

Fig. 2 schematically illustrates an example of a cross-section of the polarizing plate of the present invention. In Fig. 2, 1 indicates a siloxane-crosslinking acrylic silicone resin film layer, 2 indicates a silane coupling agent layer, 3 indicates an adhesive layer, and 4 indicates a polarizer (polarizing film).

The polarizing plate of the present invention may preferably be used as a polarizing plate that is used in a typical resistive-low reflection touch panel. In such a case, the surface of the polarizing plate, i.e., the top surface thereof used in a touch panel, can achieve greater surface hardness.

Fig. 3 schematically illustrates a cross-section of a general resistive-low reflection touch panel that utilizes a polarizing plate. In Fig. 3, 6 indicates a polarizing plate, 7 indicates an ITO film, 8 indicates a spacer, 9 indicates an adhesive and 10 indicates an ITO glass.

A low reflection touch panel comprises a polarizing plate on the surface of the touch panel. On the back surface thereof, one pair of transparent planer members, each having a resistance film comprising a transparent electrode such as ITO or the like, are arranged to face each other with a certain space therebetween. In the operation of the touch panel, when a user presses, with a finger or a pen, an arbitrary position of the planer member, the resistance films are

brought into contact with each other, permitting conduction therebetween at the pressed position. The pressed position is detected from the resistance value between the standard position of each resistance film and the contacted position on each resistance film. Thereby, the coordinates of the contacted position on the panel are recognized, providing a suitable interface function.

In Fig. 3, a film and a glass are both exemplified as transparent planer members. However, the transparent planer members may be a film and a film, a glass and a film, or a film and a film that is bonded to a support such as a glass, a plastic sheet or the like.

Low reflection touch panels comprising a polarizing plate include linear polarization-type touch panels and circular polarization-type touch panels.

Films usable as a substrate forming a resistance film in a linear polarization-type low reflection touch panel are optical isotropic films, such as aliphatic cyclic polyolefins, thermoplastic norbornene resins, polyethersulfones (PES), polycarbonates (PC), and the like.

The film used in a circular polarization-type low reflection touch panel is a retardation film that is produced by stretching the film having optical isotropy; or, in addition to the optical isotropic film, the retardation film may be laminated between a polarizing plate and an electrode film. In the circular polarization-type touch panel, the retardation film is also laminated on the back surface of the glass.

Of the transparent planer members, the upper planer member usually has a thickness of about 50 to about 500 μm, and is bonded to the polarizing plate by means of an adhesive having a thickness of about 10 to about 50 μm. This is used as the upper structure of a low reflection touch panel.

EFFECT OF THE INVENTION

According to the polarizing plate protective film and the polarizing plate of the present invention, the following significant effects may be achieved.

(1) The polarizing plate of the present invention has a remarkably improved surface hardness. Specifically, the use of a siloxane-crosslinking acrylic silicone resin film in a protective film can improve, without involving a hardcoat treatment, the surface pencil hardness to a value of about 4H to about 8H. Therefore, the polarizing plate of the present invention may preferably be used in a cellular phone screen, as the surface of a low reflection touch panel, etc., which require high surface hardness.

(2) The polarizing plate of the present invention can minimize, even in a high temperature and high humidity environment, defects such as a decrease of polarization degree, a hue change, optical leakage in a crossed-nicol state, a dimensional change of the polarizing plate, and the like. Such effects are understood to be achieved because the siloxane-crosslinking acrylic silicone resin film usually has a water vapor permeability as low as about 14 $g/m^2$/1 day, and undergoes a small dimensional change. Therefore, even when a high environmental resistance is required, the polarizing plate of the present invention may be preferably used in liquid crystal displays of car navigation systems and the like; and in low reflection touch panels, and the like.

Comparatively, regarding the polarizing plate comprising a TAC protective film, which has been widely used, the film usually has a water vapor permeability as high as about 300 $g/m^2$/1 day, thus causing, in a high temperature and high humidity environment, severe deterioration such as a decrease of polarization degree and the like. Therefore, when the polarizing plate comprising a TAC protective film is used in liquid crystal displays of car navigation systems etc., the contrast of the liquid crystal displays may be deteriorated; and when used in a low reflection touch panel, a shape change thereof may occur.

(3) The polarizing plate of the present invention may be prepared by a simple method, based on the easy preparation of the protective film. Specifically, the protective film used in the present invention may be prepared by an easy method comprising simply applying a silane coupling agent on a siloxane-crosslinking acrylic silicone resin film. Compared to the TAC film, which is a conventional protective film, and which requires a saponification and air-drying treatment, the 1-layer coating of the present invention can save time with a simple process that involves no air-drying treatment. As is clear from the above, the polarizing plate of the present invention may readily be prepared by a simple method comprising simply bonding the aforementioned protective film to the polarizer.

BRIEF DESCRIPTION OF THE DRAWINGS

Fig. 1 schematically illustrates a cross-section of the polarizing plate protective film in accordance with the present

invention.

Fig. 2 schematically illustrates an example of a cross-section of the polarizing plate in accordance with the present invention.

Fig. 3 schematically illustrates an example of a cross-section of a resistive touch panel.
Fig. 4 schematically illustrates a cross-section describing a resistive touch panel application examination.

EXPLANATION OF REFERENCE NUMERALS

1. Siloxane-crosslinking acrylic silicone resin film layer
2. Silane coupling agent layer
3. Adhesive layer
4. Polarizer
6. Polarizing plate
7. ITO film
8. Spacer
9. Adhesive
10. ITO glass
11. Adhesive
12. ITO electrode

BEST MODE FOR CARRYING OUT THE INVENTION

Hereinafter, the present invention will be described in more detail with reference to the Production Examples, Examples and Comparative Examples. In each Example, the polarization degree of polarizing plate was measured in the following manner; and the environmental test, the pencil hardness test, the evaluation of dimensional change and resistive touch panel application test were conducted in the following manner.

Polarization Degree of Polarizing Plate

Two polarizing plates are laminated on top of one another so that the polarizing axes are oriented in the same direction. Then, using a spectrophotometer, the light transmittances are continuously measured from a wavelength of 400 nm to 700 nm. The average of the light transmittances measured is referred to as "$T_1$". Subsequently, the two polarizing plates are laminated on top of one another so that the polarizing axes are oriented in mutually orthogonal directions, and the light transmittances were measured in the same manner as the above. The average of the measured values is referred to as "$T_2$". Based upon these values, the polarization degree is calculated using the following formula.
$$\text{Polarization Degree (\%)} = \{(T_1-T_2)/(T_1+T_2)\}^{1/2}\text{x}100$$

Environmental Test

An environmental test is conducted by leaving a polarizing plate to stand for 40 hours in an atmosphere at a temperature of 80°C and a humidity of 90% RH. The polarization degree is measured after the test so as to compare it with that measured before the test. A smaller decrease in the polarization degree means that better resistance to moist heat is achieved.

Pencil Hardness Test

In accordance with JIS K 5400, the surface is scratched at a 1 kg pressure using pencils having various hardness grades, and the surface hardness is evaluated to determine whether a scratch is formed thereon. The test is repeated 5 times, and the pencil hardness with which a scratch is formed less than 2 times is indicated. A total of 17 pencil harness grades are used, from H to 9H, F, HB, and B to 6B.

Evaluation of Dimensional Change

A polarizing plate is cut into a piece measuring 60 mm in the oriented axis direction (the MD direction) of the PVA polarizer, and 50 mm in the transverse direction (the TD direction). Using a measuring device, the cut polarizing plate piece is measured in the TD direction and the MD direction; this is regarded as the initial dimension, $L_1$. The dimensions after the environmental tests (temperature: 80°C; 24 hours; and temperature: 85°C; humidity: 90%; 24 hours) are measured in the same manner as above; these are regarded as the after-test dimensions, $L_2$. Based upon these values, the dimensional change is calculated using the following formula. A larger minus value of the dimensional change indicates the contraction of the polarizing plate; and a larger plus value thereof indicates the enlargement of the polarizing plate.
$$\text{Dimensional Change (\%)} = [(L_2 - L_1)/L_1] \times 100$$

Resistive Touch Panel Application Test

A polarizing plate is bonded to a film comprising, on its surface, an ITO transparent electrode by means of an acrylic pressure-sensitive adhesive (25 μm in thickness), which is then cut into a sample piece measuring 70 mm in the oriented axis direction (MD direction) of the PVA polarizer and 70 mm in the transverse direction (TD direction). Thereby, the upper structure of a resistive-low reflection touch panel is obtained. The obtained sample is subjected to the environmental test (temperature: 85°C; humidity: 90%; 120 hours). Thereafter, the warp amount (mm) of the resulting sample is measured using a ruler, as shown in Fig. 4. Fig. 4 schematically illustrates a cross-section demonstrating the resistive touch panel application test. In Fig. 4, 6 indicates a polarizing plate, 7 indicates an ITO film, 11 indicates an adhesive, and 12 indicates an electrode. The warp amount is determined by measuring each curved amount at the four corners of the sample, and calculating the average value therefrom to give a warp amount. If the warp amount is small, defects are not likely to occur in actual use thereof as a touch panel structure. If the warp amount is large, defects will easily occur.

Example 1

Preparation of Protective Film

The silicone resin composition (product number "2015", produced by Nippon Steel Chemical Co., Ltd.) disclosed in WO 2004/085501 A1 was cast onto a PET film. The resulting cast film was cured by light irradiation (a high-pressure mercury lamp; wavelength: 320 nm; irradiation time: 3 seconds); thereby, a siloxane-crosslinking acrylic silicone resin film having a thickness of 200 μm was prepared. Subsequently, both surfaces of the obtained film were subjected to corona discharge treatment in air with a discharge amount of 300 $W/m^2 \cdot min$, and thereby, the water contact angle thereof was adjusted to 37 degrees (23°C).
Thereafter, 1 wt.% of a cyclohexane solution of an isocyanate-based silane coupling agent (trade name: "KBE-9007"; produced by Shin-Etsu Chemical Co., Ltd.; 3-isocyanatepropyltriethoxysilane) was applied, using a wire bar, on one surface of the above siloxane-crosslinking acrylic silicone resin film that had been subjected to the surface treatment, so that the thickness of the applied cyclohexane solution after drying was 1.0 μm. Then, the obtained product was left to stand for 10 minutes in an oven at 100°C to be dried.
Thereby, the film protecting a polarizing plate of the present invention, comprising a silane coupling agent layer formed on one surface of the siloxane-crosslinking acrylic silicone resin film, was obtained.

Production Example 1

Preparation of Polarizer

A polyvinyl alcohol film (trade name: "Kuraray vinylon film VF-9X75R"; produced by Kuraray Co., Ltd.; thickness: 75 μm) was immersed for 5 minutes in an aqueous solution comprising 5,000 parts by weight of water, 35 parts by weight of iodine and 525 parts by weight of potassium iodide, so that the iodine was adsorbed into/onto the film. The resulting film was then uniaxially stretched to about 4.4 times in the longitudinal direction in a 4 wt.% of an aqueous boric acid solution at 45°C, which was dried under tension to thereby obtain a polarizer (polarizing film) having a thickness of 17 μm.

Example 2

Preparation of Polarizing Plate

As an adhesive, 1.5 wt.% of an aqueous polyvinyl alcohol solution having an average polymerization degree of 1,800 and a saponification degree of 99% was used. The adhesive was applied onto both surfaces of the polarizing film obtained in Production Example 1 to give the adhesive a thickness of 1 μm after drying. While the adhesive was in an undried state, the polarizing plate protective films obtained in Example 1 were laminated on each surface of the polarizing film through the silane coupling agent coated surfaces. The resulting structure was then secured between a rubber roller and a metal roller (the rubber roller having a diameter of 200 mm, the metal roller having a diameter of 350 mm, and the line pressure being 10 kg/cm), and allowed to stand in an oven at 40°C for 24 hour to be dried.
Thereby, a polarizing plate comprising a layered structure of a protective film/polarizing film/protective film was obtained.
The obtained polarizing plate had a polarization degree of 99.8%, and the protective film surface had a pencil hardness of 4H. The polarization degree after the environmental test (temperature: 80°C; humidity: 90%; 40 hours) was 99.8%. As is clear from the results, the polarization degree was not decreased compared to that before the test, and the obtained polarizing plate was excellent in resistance to moist heat.

Example 3

The dimensional change with respect to the polarizing plate obtained in Example 2 was measured in the environments of high temperature, and high temperature and high humidity. The dimensional change under a high temperature of 80°C for 24 hours was measured as -0.23% in the MD direction and -0.20% in the TD direction. The dimensional change under a high temperature of 85°C and a high humidity of 90% for 24 hours was measured as -0.10% in the MD direction and -0.15% in the TD direction. As is clear from the results, the dimension changed very little.
Subsequently, the resistive touch panel application test was carried out. As a film comprising an ITO transparent electrode on the surface, a film in which an ITO transparent electrode (thickness: 30 nm; surface resistance value: 250 Ω/sq.) was formed, by sputtering, on the surface of the siloxane-crosslinking acrylic silicone resin film (thickness: 200 μm) that was obtained in Example 1 was used. The warp amount of the upper structure after the environmental test performed at a temperature of 85°C and a humidity of 90% for 120 hour, was 0.6 mm, and thus very little warp occurred. The results reveal that the use of this polarizing plate can develop a resistive-low reflection touch panel that has high environmental durability.

Comparative Example 1

A polarizing plate for comparison was produced in the same manner as in Example 2, except that a TAC film (trade name "TDY80UL", produced by Fuji Photo Film Co.) was bonded to both surfaces of the polarizing film, in place of the polarizing plate protective film obtained in Example 1. The obtained polarizing plate had a polarization degree of 99.8% and the surface thereof had a pencil hardness of H. The polarization degree after the environmental test (temperature: 80°C; humidity: 90%; 40 hours) was 94.1%, which shows that the polarization degree decreased considerably before and after the test, and that the obtained polarizing plate had unsatisfactory resistance to moist heat.

Comparative Example 2

A protective film used for a polarizing plate for comparison was obtained in the same manner as in Example 1 without applying the silane coupling agent onto the siloxane-crosslinking acrylic silicone resin film, which had been subjected to corona discharge treatment so as to adjust the water contact angle to 37 degrees (23°C).
Subsequently, 1.5 wt.% of an aqueous polyvinyl alcohol solution having an average polymerization degree of 1,800 and a saponification degree of 99% was applied as an adhesive onto both surfaces of a polarizer (polarizing film) as in Example 2, with which the aforementioned protective film was, before the applied adhesive was dried, brought into contact in such a manner that the adhesive layer had a thickness of 1 μm after drying. However, the bonding did not succeed, and a polarizing plate was not produced.

Comparative Example 3

The dimensional change with respect to a commercially available polarizing plate (trade name: "SKN-18243TL", produced by Polatechno Co., Ltd.) comprising a TAC film as a protective film was measured in environments of high temperature, and high temperature and high humidity. The dimensional change under the high temperature of 80°C for

24 hours was measured as -0.61% in the MD direction, and -0.34% in the TD direction. The dimensional change under a high temperature of 85°C and high humidity of 90% for 24 hours was measured as -2.44% in the MD direction, and 1.27% in the TD direction. Accordingly, the dimension change was extremely large.

Subsequently, the resistive touch panel application test was carried out. As a film comprising an ITO transparent electrode on the surface, the same film used in Example 3 was used. The warp amount of the upper structure after the environmental test performed at a temperature of 85°C and a humidity of 90% for 120 hours was 13.3 mm, and thus the warp amount thereof was large. The results reveal that the use of, under a harsh environment, the polarizing plate obtained in Example 2 can develop a touch panel having higher durability, compared to the polarizing plate obtained in Comparative Example 3.

## Claims

1. A polarizing plate protective film comprising a silane coupling agent layer on one surface of a siloxane-crosslinking acrylic silicone resin film.

2. The polarizing plate protective film according to Claim 1, wherein the silane coupling agent is an isocyanate-based silane coupling agent.

3. A polarizing plate comprising the protective film of Claim 1 and a polarizer, in such a manner that the protective film is laminated on one surface or both surfaces of the polarizer through the silane coupling agent layer.

4. The polarizing plate according to Claim 3, wherein the polarizer is a polarizing film comprising a polyvinyl alcohol-based polymer, to which iodine or dichromatic dye is absorbed.

5. The polarizing plate according to Claim 3, wherein the protective film and the polarizer are bonded to each other by means of an aqueous adhesive comprising an aqueous polyvinyl alcohol solution.

6. A resistive touch panel comprising the polarizing plate of Claim 3.

FIG.1

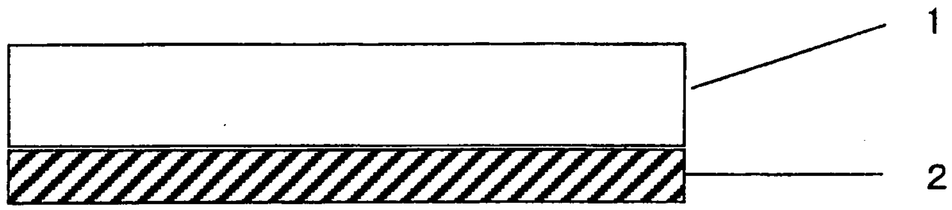


FIG.2

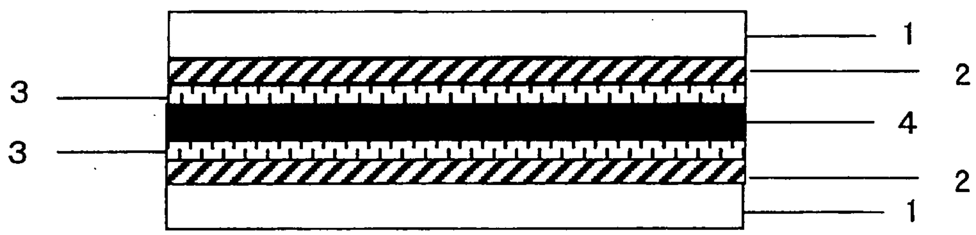


FIG.3

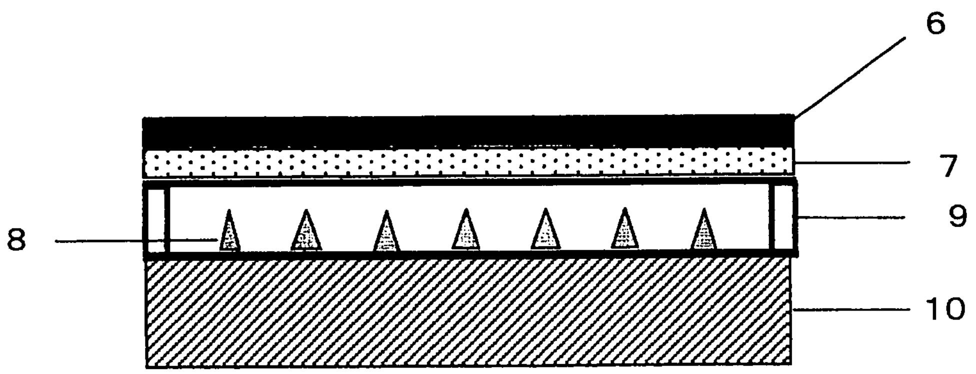

FIG. 4

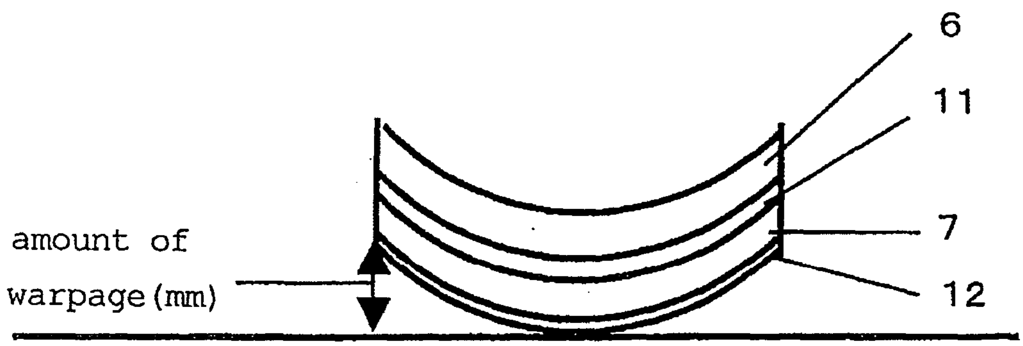

**INTERNATIONAL SEARCH REPORT**

International application No.
PCT/JP2007/073171

A. CLASSIFICATION OF SUBJECT MATTER
*G02B5/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-213067 A (Sumitomo Bakelite Co., Ltd.), 30 July, 2003 (30.07.03), Full text (Family: none) | 1-6 |
| A | JP 2003-222702 A (Fuji Photo Film Co., Ltd.), 08 August, 2003 (08.08.03), Full text (Family: none) | 1-6 |
| A | JP 2004-137460 A (Konica Minolta Holdings, Inc.), 13 May, 2004 (13.05.04), Full text; all drawings & US 2004/44127 A1 & CN 1485361 A | 1-6 |

☒ Further documents are listed in the continuation of Box C.  ☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
|---|---|
| Date of the actual completion of the international search<br>17 January, 2008 (17.01.08) | Date of mailing of the international search report<br>29 January, 2008 (29.01.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2007/073171

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-308646 A (Nitto Denko Corp.), 09 November, 2006 (09.11.06), Full text; all drawings & US 2006/238681 A1 | 1-6 |
| A | WO 2004/85501 A1 (Nippon Steel Chemical Co., Ltd.), 07 October, 2004 (07.10.04), Full text & US 2006/52567 A1 & EP 1607419 A1 | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006227604 A
- WO 2004085501 A1
- JP 2004123936 A